# EUROPEAN PATENT APPLICATION

(11) **EP 2 251 870 A1**
(43) Date of publication of application: **17.11.2010**
(21) Application number: 10161849.4
(22) Date of filing: 04.05.2010
(51) Int. Cl.: G11B 27/034, G11B 27/036, G11B 27/10, G11B 27/32, G10L 21/06, G11B 19/16, G11B 25/00, G06F 3/16

(54) **Audio recording method**

(30) Priority: 12.05.2009 US 177296 P
(71) Applicant: Agfa Healthcare, 2640 Mortsel (BE)
(72) Inventor: Marchildon, Jamie, 2640, Mortsel (BE)

(57) **Abstract**

Method of playing an audio file wherein upon interruption of the playing by user interaction, the playing of a predefined part of this audio file preceding the position in the audio file where the playing is interrupted, is resumed. When restarting the recording, it is resumed from the interrupt position.

## Description

### FIELD OF THE INVENTION

The present invention relates to audio recording. More specifically the invention relates to a method of playing an audio file adapted to permit verification whether a position within a recorded audio file where recording of the audio file is interrupted matches with an envisaged position.

### BACKGROUND OF THE INVENTION

When an audio file, most typically a text, is dictated to an audio recorder, the dictation may be interrupted and resumed after a short time. It is sometimes desirable to stop audio recording, move back to a certain position in the recorded file and continue recording by inserting new audio file or overwriting a small portion of the recorded file.

For example in case of dictation of text, it may happen that the user suspects that he has dictated an erroneous part of text. He then typically stops the recording, activates the rewind function (by pressing the rewind button or by shifting the position of the cursor on displayed slider), then deactivates the rewind function and resumes recording thereby overwriting part of the recorded file or inserting a new audio file part.

In order to locate the position where the recording is to be resumed, in the state of the art recording devices and recording methods, the recorded audio file is re-winded and the last portion of the recorded audio file is re-played. The user then locates the point where he wants to start overwriting the last part of the already recorded audio file or to insert a certain part, stops the playing and continues recording from the position where the playing was stopped. For example by means of a slider a certain position within a recorded audio file is defined. Then, the file is played from the defined position and the user, while listening to the file, determines the point where he wants to resume recording. At that point the user stops (most commonly by activating a stop button) the playing of the audio file and resumes the recording.

A problem with the existing audio recording devices is that due to the reaction time of the user, it is not possible to locate with high accuracy the position in the recorded audio file where the user desires to resume recording. Because of the user's reaction time, the moment of time when the user identifies the position in the audio file where he wants to resume recording and the time when the stop button is activated, will not be identical.

This may have severe consequences. For example in medical applications where diagnostic reports and therapies to be applied are dictated to a recording system, wrong positioning might result in the clipping of a word resulting in a completely different meaning of the dictated text. This may result in a severe risk to the patient's care.

It is an aspect of the present invention to provide a solution to the above-described problem.

### SUMMARY OF THE INVENTION

The above-mentioned aspect is realized by a method of playing an audio file as set out in claim 1.

According to the invention, upon interruption of the playing of an audio file by user interaction, the playing of a predefined part of this audio file preceding the location in the audio file where the playing is interrupted, is resumed. However, when restarting the recording, it is resumed from the interrupt position.

The location where the interruption was executed is upheld, although a preceding part of the audio file is played.

The user could press the stop button at a certain position, then a part of the audio file preceding the stop position is played and the user can re-position if necessary. If the user re-positions and starts the recording again, the recording is resumed from the repositioned location.

For example, if a physician who is dictating a medical report has recorded a statement such as: " The heart outline is normal and the hilar vessels are of normal appearance. No disease is seen in the lung fields or pleura."

The physician might want to pin-point the position between the words "hilar" and "vessels" to insert the recording "and mediastinal". Because review clips are automatically and quickly played on every re-position, the physician would hear "normal an" ..., move again and hear "ormal and th" ... , then "and the hilar". At this point he knows this is where he wants to resume or insert additional recordings.

When finished, a clean recording of the following will be realized: " The heart outline is normal and the hilar and mediastinal vessels are of normal appearance. No disease is seen in the lung fields or the pleura".

With a long dictation this invention will allow a simple way to edit audio where normally the user would have to start all over again and re-record the entire dictation to simply insert "and mediastinal".

Specific features for preferred embodiments of the invention are set out in the dependent claims.

In one embodiment the user can adjust the length of the period of the audio clip that is replayed after interruption.

The length of the review clip may vary depending on the type of recording being performed or simply by the user's preferences.

By allowing the varying of the review clip length, all users can benefit fully from this invention. For example if a user is recording his own voice and talks more slowly, he may want to increase the length of the review clip to accommodate his own recording style.

It has been experienced that a period of 1 second is in many cases an appropriate clip length (duration).

The invention is particularly useful for application in dictation systems.

For example in a medical picture archiving and communication system (PACS system) in which the physician is allowed to view medical images and additionally to create voice clips, such as medical reports, the invention can be applied.

However, the invention can be applied in any audio recorder (hardware, e.g. hand held or software) to assist in the exact positioning of a resume point after an interruption.

The benefit comes into play when editing audio to be able to pin-point a position for overwriting or inserting additional audio.

In an alternative embodiment of the present invention the waveform or position values of the audio signal is made visible to the user and the user is allowed to manually navigate these values. The user is provided with an indication that is easy to act upon, he will be able to pin-point the desired position in the audio signal more quickly.

## Claims

1. Method of playing an audio file wherein upon interruption of the playing by user interaction, a predefined part of this audio file preceding the position in the audio file where the playing is interrupted, is re-played.

2. Method according to claim 1 wherein, after re-play of said predefined part, resume of recording is performed from the interrupt position.

3. Method according to claim 1 wherein the length of said predefined part is adjustable.
